Europäisches Patentamt

European Patent Office

Office européen des brevets

(11) Veröffentlichungsnummer: **0 319 768 B1**

(19)

# (12) EUROPÄISCHE PATENTSCHRIFT

(45) Veröffentlichungstag der Patentschrift: **26.01.94**

(51) Int. Cl.⁵: **G11B 5/56**

(21) Anmeldenummer: **88119389.0**

(22) Anmeldetag: **22.11.88**

(54) **Magnetband zur Prüfung und Justierung von Magnetköpfen.**

(30) Priorität: **05.12.87 DE 3741308**

(43) Veröffentlichungstag der Anmeldung:
**14.06.89 Patentblatt 89/24**

(45) Bekanntmachung des Hinweises auf die
Patenterteilung:
**26.01.94 Patentblatt 94/04**

(84) Benannte Vertragsstaaten:
**AT CH DE FR GB LI NL**

(56) Entgegenhaltungen:
**FR-A- 1 395 717**
**FR-A- 2 229 111**
**US-A- 4 101 937**
**US-A- 4 254 440**

(73) Patentinhaber: **BASF Magnetics GmbH
Gottlieb-Daimler-Strasse 10
D-68165 Mannheim(DE)**

(72) Erfinder: **Singhoff, Werner, Dipl.-Ing.
Planeggerstrasse 129
D-8000 München 60(DE)**
Erfinder: **Dankerl, Johann, Dipl.-Ing.
Westermühlstrasse 23
D-8000 München 5(DE)**

(74) Vertreter: **Langfinger, Klaus-Dieter, Dr. et al
BASF Aktiengesellschaft,
Patentabteilung ZDX - C 6
D-67056 Ludwigshafen (DE)**

**Beschreibung**

Die Erfindung betrifft ein Verfahren zur Prüfung und Justierung der Spalte von Magnetköpfen für Aufzeichnungen mit n Spuren, wobei n = 1, 2 ... sein kann, wobei das Magnetband zueinander parallele Aufzeichnungen konstanter Wellenlänge und Amplitude aber unterschiedlicher Phasenlage enthält.

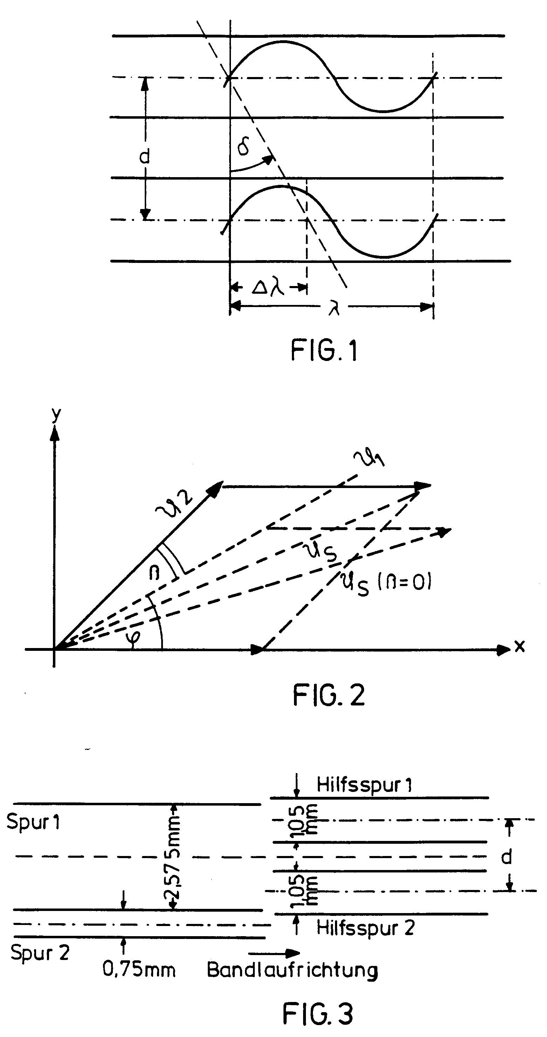

Für die Abtastung kleiner Wellenlängen bei magnetischen Aufzeichnungsverfahren müssen die Aufzeichnungs- und Wiedergabespalte der Magnetköpfe so genau wie möglich parallel und im allgemeinen senkrecht zur Bandlaufrichtung ausgerichtet sein. Mangelnde Spaltjustierung macht sich bei einer Mono-Kanal-Aufnahme und -Wiedergabe als Pegelverlust bemerkbar. Bei mehrspurigen Aufnahmen und Wiedergaben tritt zusätzlich ein wellenabhängiger Phasenunterschied ein (siehe Figur 1), was beispielsweise darauf hinausläuft, daß der Wiedergabepegel einen Frequenzgang aufweist, falls Wiedergabekanäle zu einem Kanal zusammengefaßt werden (Stereo-Mono-Kompatibilität).

Zur Justierung der Spalte von Magnetköpfen sind mehrere Verfahren bekannt:

- Ein Einstellband, auf welchem kurze Wellenlängen aufgezeichnet sind, wird von dem zu justierenden Magnetkopf abgetastet und dessen Spaltlage bis zum Pegelmaximum verändert. Dazu ist es im allgemeinen erforderlich, daß der Spalt mehrfach über die optimale Lage gedreht wird, außerdem muß auch ein korrekt justierter Magnetkopf dejustiert und neu eingestellt werden.

- Aus der DE-PS 1 522 975 ist ein Magnetband bekannt, welches 2 phasenverschobene Aufzeichnungen in 2 einander parallelen, voneinander getrennten und gleichbreiten Spuren trägt, wobei die beiden Spuren Aufzeichnungen konstanter und kleiner Wellenlängen tragen, deren Phasenlage zueinander abschnittsweise jeweils um den gleichen Betrag Zwischen 30 und 150° vor- bzw. nacheilt. Dieses Prüfband bietet bei Mono-Aufzeichnungen eine einfache und präzise Justierung der Spaltstellung, erfordert aber bei mehrspurigen Aufzeichnungen das Zusammenschalten von mindestens 2 Wiedergabekanälen oder andere Eingriffe in das Gerät. Weitere Prüfbänder sind aus der DE-AS 2 314 126 sowie der DD-PS 107 537 bekannt. Auch die Lehre dieser Schriften vermittelt keine einfache Justierung der Kopfspalte bei n-Kanal-Aufzeichnungen.

Ein Verfahren nach dem Oberbegriff des Anspruchs 1 ist aus FR-A-1395717 bekannt. $\phi 1$ weist dabei dem Betrag 90° auf.

Daher bestand die Aufgabe, ein Verfahren zur Überprüfung und Justierung der Spaltlage zu finden, das diese Überprüfung ohne Eingriff in das Gerät und seine Beschaltung mit denen je Kanal vorhandenen Pegelmessern ermöglicht.

Erfindungsgemäß wurde die Aufgabe gelöst mit einem Magnetband mit den im kennzeichnenden Teil des Anspruchs 1 dargelegten Maßnahmen. Damit wird ein größerer Pegelunterschied erhalten. Weitere Einzelheiten der Erfindungen gehen aus den Unteransprüchen, der Beschreibung und den Zeichnungen hervor.

Die Erfindung wird nun anhand der Zeichnungen näher erläutert und zwar zeigt

Figur 1     die Phasenbeziehung zweier Spuren
Figur 2     das Vektordiagramm zweier Wiedergabespannungen $U_1$, $U_2$
Figur 3     eine erfindungsgemäße Ausführung eines Magnetbandes zur Justierung und Prüfung der Spaltrichtung
Figur 4     die Pegelunsymetrie als Funktion der Phasenwinkel $+ \phi$ und $- \phi$.

*1. Einfluß der Spaltlage des Wiedergabekopfes auf die elektrische Phasenlage zweier Spuren*

Figur 1 zeigt die Phasenbeziehung zweier Spuren mit dem Spurmittenabstand d, der aufgezeichneten Wellenlänge λ, dem Schiefstellungswinkel δ und dem örtlichen Versatz Δ λ der Abtastung durch den Wiedergabespalt in der zweiten Spur. Bei periodischer Aufzeichnung ist Proportionalität zwischen Δ λ und dem Phasenverschiebungswinkel $\beta$ einerseits sowie der Wellenlänge und dem Winkel einer Periode andererseits gegeben.

$$\frac{\Delta\lambda}{\beta} = \frac{\lambda}{360} \qquad \longrightarrow \qquad \Delta\lambda = \frac{\beta \cdot \lambda}{360°}$$

$$\tan\delta = \frac{\beta\,\lambda}{d \cdot 360°}$$

$$\beta = \frac{360° \cdot d}{\lambda} \cdot \tan\delta$$

Werden kleine Winkel $\delta$ für die Spaltschiefstellung vorausgesetzt ($\delta < 30'$) dann kann mit hinreichender Genauigkeit der tan des Winkels durch sein Bogenmaß

$$\hat{\delta} = \frac{\delta° \times 2}{360}$$

ersetzt werden.

Die elektrische Phasenverschiebung $\beta$ wird damit zu

(1) $\qquad \beta = 2\pi\delta \cdot \frac{d}{\lambda}$

2. Überlagerung von Wiedergabespannungen verschiedener elektrischer Phasenlagen

Figur 2 zeigt das Vektordiagramm zweier Wiedergabespannungen $U_1$, $U_2$, wenn die Aufzeichnungen gleicher Wellenlänge und Magnetisierung, jedoch verschiedener Phasenlage $\phi$ von einem Wiedergabkopf abgetastet werden, der aufgrund seiner Spaltschiefstellung zusätzlich eine elektrische Phasenverschiebung $\beta$ erzeugt.

Für den Betrag der Summenspannung durch Überlagerung gilt allgemein:

$U_s = \sqrt{(U_{x1} + U_{x2})^2 + (U_{y1} + U_{y2})^2}$

Die Spannung $U_1$ der Spur 1 sei Phasenreferenz mit $\phi_1 = 0$.

Somit sind

$$U_{x1} = U_1 \qquad\qquad U_{x2} = U_2 \cdot \cos(\phi + \beta)$$
$$U_{y1} = 0 \qquad und \qquad U_{y2} = U_2 \cdot \sin(\phi + \beta)$$

Aufgrund vorausgesetzter gleicher Magnetisierung in den Spuren sind $U_1$ und $U_2$ gleich.

Somit wird die Summenspannung

$U_s = U\sqrt{[1 + \cos(\phi + \beta)]^2 + \sin^2(\phi + \beta)}$

(2) $\qquad U_s = U\sqrt{2} \cdot \sqrt{1 + \cos(\phi + \beta)}$

Setzt man nunmehr Gleichung (1) in (2) ein, so entsteht die Beziehung

3

$$(3) \qquad U_S = U \sqrt{2} \cdot \sqrt{1 + \cos\left(\varphi + 2\pi\delta\frac{d}{\lambda}\right)}$$

Betrachten wir den Sonderfall $\phi$ und $\beta$ gleich 0, so wird

$U_{so} = 2U$

Dieser Wert $U_{so}$ eignet sich als Referenzspannung für Erfassung des Spannungsverlustes bei $\phi$ und $\beta \neq$ 0 als Pegelabfall $\Delta$ P.

$$\Delta P = 20 \cdot \log \frac{U_S}{U_{SO}}$$

$$= 20 \log \frac{U\sqrt{2} \cdot \sqrt{1 + \cos\left(\varphi + 2\pi\delta\frac{d}{\lambda}\right)}}{2U}$$

$$(4) \qquad \Delta P = 20 \log\left(\frac{1}{2}\sqrt{2} \cdot \sqrt{1 + \cos\left(\varphi + 2\pi\delta\frac{d}{\lambda}\right)}\right)$$

3. Aufbau des Spaltlagenprüfbandes gemäß der vorliegenden Erfindung

Auf ein kommerziell erhältliches Magnetband wird folgende Aufzeichnung aufgesprochen:

Mindestens eine Spur gemäß dem jeweils vorliegenden Aufzeichnungsformat (beispielsweise in IEC-Publikation 94, Teil 6 festgelegt) wird in 2 Hilfsspuren wie in Figur 3 dargestellt aufgeteilt, die mit einem Spezialmagnetkopf mit korrekter Spaltlage mit dem Spurmittenabstand $\alpha$ aufgezeichnet werden. Aufzeichnungswellenlänge $\lambda$ sowie Magnetisierung, vorzugsweise durch gleiche Hilfsspurbreite, sind in beiden Spuren gleich.

Die Hilfsspur 1 wird kontinuierlich aufgezeichnet. Die Hilfsspur 2 wird in Zeitintervallen getaktet, jedoch mit unterschiedlicher Phasenlage aufgezeichnet. Jedem Zeitintervall wird eine Phasenlage zugeordnet.

Beispielsweise folgt dem Phasenwinkel 0° zur Zeit $t_0$ eine Phasenlage $\phi = \phi_1$ zur Zeit $t_1$ und dann eine solche von $\phi = - \phi_1$ zur Zeit $t_2$. Die Phasenverschiebung $\phi$ kann alle Werte zwischen 90° und 160° annehmen.

Nunmehr wird mit dem zu prüfenden Magnetkopfspalt die betreffende Spur, die, wie aus dem vorhergehenden Absatz hervorgeht, 2 Hilfsspuren enthält, abgetastet und die zu den Zeitpunkten $t_0$, $t_1$ und $t_2$ erhaltenen Pegel, die mit einem üblichen, dem betreffenden Kanal zugeordneten Pegelmesser gemessen. Bei Abtastung mit korrekter Spaltlage, also mit $\phi = 0$, ergibt sich ein Referenzpegel sowie zwei niedrigere Pegelwerte für $\phi = + \phi_1$ und $\phi = - \phi_1$, die einander gleich sind.

Liegt ein Schiefstellungswinkel $\delta \neq 0$ vor, so sind die Pegelabfälle $\Delta P\phi_1$ und $\Delta P\phi_2$ unterschiedlich. Aus der Differenz der beiden Pegelwerte zum Zeitpunkt $t_1$ und $t_2$ kann mittels der folgenden Gleichung der Schiefstellwinkel des Spaltes berechnet werden:

$$\Delta\Delta P = 20 \log\left(\frac{1}{2}\sqrt{2}\ \sqrt{1+\cos(\varphi+\frac{2\pi\delta d}{\lambda})}\ \right) - 20\log\left(\frac{1}{2}\sqrt{2}\ \sqrt{1+\cos(\frac{2\pi\delta d}{\lambda}-\varphi)}\ \right)$$

$$(5)\qquad \Delta\Delta P = 10 \log \frac{1+\cos\left(\varphi+\frac{2\pi\delta d}{\lambda}\right)}{1+\cos\left(\frac{2\pi\delta d}{\lambda}-\varphi\right)}$$

Zusätzlich kann auch die Höheneinstellung des Kopfspaltes überprüft werden. Hierzu kann eine gleichphasige Aufzeichnung in beiden Hilfsspuren so vorgenommen werden, daß zum Zeitintervall $t_1$ nur eine Hilfsspur, im Zeitintervall $t_2$ die andere Hilfsspur und in $t_3$ beide Hilfsspuren aufgezeichnet sind. Dann muß bei korrekter Kopfhöheneinstellung zum Zeitpunkt $t_3$ die Summenspannung $U_S = 2U$, also die Spannungen $U$ im Zeitintervall $t_1$ bzw. $t_2$ sein. Eine andere Möglichkeit der Korrektur der Kopfhöheneinstellung besteht darin, einen gezielten Spurversatz der n Spuren außerhalb der festgelegten Wiedergabespur vorzunehmen. Eine dritte Möglichkeit der Überprüfung besteht darin, daß mit dem Prüfband ein Soll-Pegelwert für $t_0$, also Aufzeichnung gleicher Phasen in Hilfsspur 1 und 2 mitgeliefert wird. Wird nach behobener Justierung der Spaltschiefstellung ein zu niedriger Pegel gemessen, so liegt eine falsche Kopfhöheneinstellung vor.

4. Ausführungsbeispiel der vorliegenden Erfindung

Auf einem Prüf- und Justierband mit 6,25 mm Breite wurden die im Abschnitt 3 beschriebenen Aufzeichnungen vorgenommen. Figur 3 zeigt die Lage der zwei 1,05 mm breiten Hilfsspuren eines Standard-4-Spurkopfes mit 1,7 mm Spurmittenabstand innerhalb einer Stereospur. Die Aufzeichnung der Hilfsspuren geschah mit einer Wellenlänge $\lambda$ = 23,8 $\mu$m (entsprechend einer Frequenz von 16 kHz) bei 38,1 cm/s Aufzeichnungsgeschwindigkeit und einem Magnetisierungsfluß von 210 nWb/m je Hilfsspur. Auf der Hilfsspur 2 wurde jede der 3 Phasenlagen 1 s lang aufgezeichnet. Mit diesem Prüfband wurde die Spaltlage des Wiedergabekopfes eines kommerziell erhältlichen 1/4''-Stereo-Wiedergabegerätes (nach IEC-Publikation 94-6) bestimmt.

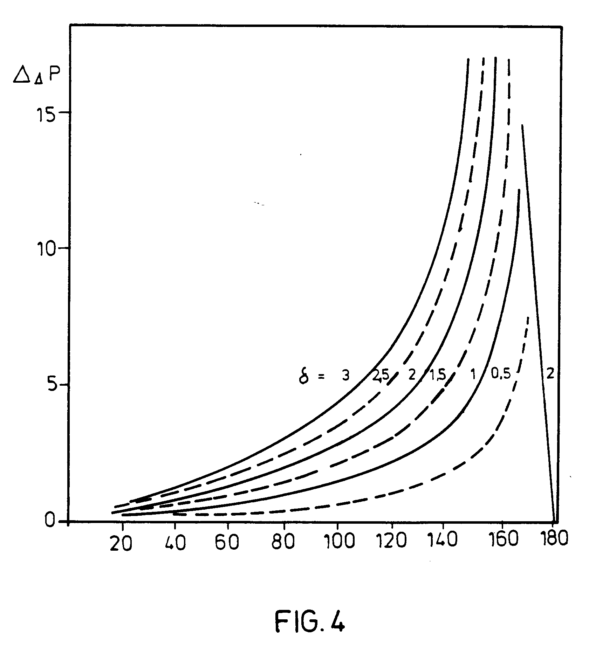

Aus dem gemessenen Pegelunterschied zur Zeit $t_1$ und $t_2$ kann bei Einsetzen der oben genannten Werte in die Gleichung 5 (Abschnitt 3) der Spaltschiefstellwinkel $\delta$ errechnet werden. Figur 4 stellt im Diagramm die Pegelunsymmetrie $\Delta\Delta P$ als Funktion der Phasenwinkel $+\phi$ und $-\phi$ mit der Spaltschiefstellung $\delta$ als Parameter dar. Somit kann der zu korrigierende Spaltschiefstellungswinkel auf einfache Weise ermittelt werden, worauf die Justierung vollzogen werden kann.

**Patentansprüche**

1. Verfahren zur Prüfung und Justierung der Schiefstellung der Spalte von Magnetköpfen für Aufzeichnungen mit n Spuren, wobei n = 1, 2 ... sein kann mit einem Magnetband, welches zueinander parallele Aufzeichnungen konstanter Wellenlänge und Amplitude enthält und wobei mindestens eine der n-Spuren in zwei voneinander getrennte Hilfsspuren (1, 2) mit dem Spurmittenabstand d aufgeteilt wird, wobei eine Hilfsspur (1) kontinuierlich aufgezeichnet wird, während die andere Hilfsspur (2) taktweise mit verschiedenen Phasenlagen $\phi$ aufgezeichnet wird, wobei ein Aufzeichnungssignal jeweils um $\phi$ = 0°, ein zweites um $\phi$ = + $\phi_1$ und ein drittes um $\phi$ = - $\phi_1$ gegen die Phasenlage der Hilfsspur (1) verschoben ist, wobei der zu prüfende Magnetkopfspalt beide Spuren im Gesamten abtastet, wobei drei zeitlich aufeinanderfolgende Pegelwerte erhalten werden und der Pegelunterschied zwischen dem mit den beiden Phasenlagen $\phi$ = + $\phi_1$ beziehungsweise - $\phi_1$ aufgezeichneten Signal ein Maß für die Spaltschiefstellung $\delta$ ist, dadurch gekennzeichnet, daß $\phi_1$ im Bereich von größer als 90° bis 160° gewählt wird.

2. Verfahren nach Anspruch 1, dadurch gekennzeichnet, daß bei Spaltschiefstellungen $\delta$ kleiner 30 Minuten und einer Aufzeichnungswellenlänge $\lambda$ der beiden Hilfsspuren (1, 2) durch den gemessenen Pegelunterschied $\Delta\Delta P$ aus der Gleichung

$$\triangle\ \triangle\ P = 10\ \log \frac{1+\cos(\phi_1 + \frac{2\pi\ \delta\ d}{\lambda})}{1+\cos(\frac{2\pi\ \delta\ d}{\lambda} - \phi_1)}$$

die Spaltschiefstellung berechnet und korrigiert wird.

3.  Verfahren gemäß Anspruch 1 mit zusätzlicher Prüfung und Justierung der Höheneinstellung von Magnetkopfspalten für Aufzeichnungen mit n Spuren, dadurch gekennzeichnet, daß das Magnetband zusätzlich in jeder der beiden Hilfsspuren (1, 2) abwechselnde Aufzeichnungen gleicher Phase und gleicher Magnetisierung enthält und wobei zum Zeitintervall t1 eine Hilfsspur (1), im Zeitintervall t2 die andere Hilfsspur (2) und im Zeitintervall t3 beide Hilfsspuren (1, 2) gleichphasig aufgezeichnet sind und wobei die Kopfhöheneinstellung solange vorgenommen wird, bis zum Zeitpunkt t3 die Summenspannung $U_s = 2U$ erhalten wird, wobei die Spannungen U im Zeitintervall t1 beziehungsweise t2 bedeuten.

## Claims

1.  A method for testing and adjusting skew of the gaps of magnetic heads for recordings with n tracks, where n may be 1, 2 ..., using a magnetic tape which contains parallel recordings of constant wavelength and amplitude and in which at least one of the n tracks is divided into two separate auxiliary tracks (1, 2) having the center-to-center track spacing d, one auxiliary track (1) being continuously recorded while the other auxiliary track (2) is periodically recorded at different phase positions $\phi$, one recording signal being shifted by $\phi = 0°$, a second one by $\phi = +\phi_1$ and a third by $\phi = -\phi_1$ relative to the phase position of the auxiliary track (1), the head gap to be tested scanning both tracks completely, three successive output levels being obtained and the difference in output levels between the signals with the two phase positions $\phi = +\phi_1$ and $-\phi_1$ being a measure of the gap skew $\delta$, wherein $\phi_1$ is chosen to be from more than 90° to 160°.

2.  A method as claimed in claim 1, wherein, with gap skews $\delta$ of less than 30 minutes and a recording wavelength $\lambda$ of the two auxiliary tracks (1, 2), the gap skew is calculated and corrected by means of the measured output level difference $\triangle\triangle P$ from the equation

$$\triangle\triangle P = 10\ \log \frac{1+\cos(\phi_1 + \frac{2\pi\ \delta\ d}{\lambda})}{1+\cos(\frac{2\pi\ \delta\ d}{\lambda} - \phi_1)}$$

3.  A method as claimed in claim 1 for additional testing and adjustment of the height setting of magnetic head gaps for recordings with n tracks, wherein the magnetic tape additionally contains recordings of the same phase and the same magnetization alternately in each of the two auxiliary tracks (1, 2), one auxiliary track (1) being recorded in the time interval t1, the other auxiliary track (2) in the time interval t2 and both auxiliary tracks (1, 2) in the time interval t3, the phases of said tracks being identical, and the head height adjustment being continued until the total voltage $U_s = 2U$ is obtained at the time t3, where the voltages are U in time interval t1 or t2.

## Revendications

1.  Procédé de contrôle et de réglage de l'inclinaison de l'entrefer de têtes magnétiques pour enregistrements à n pistes, n pouvant être égal à 1, 2, ..., avec une bande magnétique qui contient des enregistrements parallèles de longueur d'onde et d'amplitude constantes, dont on divise au moins une des n pistes en deux pistes auxiliaires séparées (1, 2) ayant l'entraxe d et sur laquelle on enregistre de façon continue sur une piste auxiliaire (1) et par intervalles avec différentes phases $\phi$ sur l'autre piste auxiliaire (2) en déphasant chaque fois un signal d'enregistrement de $\phi$ = 0°, un deuxième de $\phi$ = +$\phi_1$ et un troisième de $\phi$ = -$\phi_1$ par rapport à la phase de la piste auxiliaire (1), l'entrefer de tête magnétique à contrôler lisant les deux pistes ensemble, trois niveaux successifs dans le temps étant obtenus et la différence de niveau du signal enregistré avec les deux phases $\phi$ = +$\phi_1$ et $\phi$ = -$\phi_1$ représentant une mesure de l'inclinaison $\delta$ de l'entrefer, caractérisé par le fait qu'on choisit $\phi_1$ dans le domaine de 90° non compris à 160°.

2. Procédé selon la revendication 1, caractérisé par le fait qu'avec des inclinaisons $\delta$ de l'entrefer inférieures à 30 minutes et une longueur d'onde d'enregistrement $\lambda$ des deux pistes auxiliaires (1, 2), on calcule et corrige l'inclinaison de l'entrefer au moyen de la différence de niveau mesurée $\triangle\triangle P$ donnée par la formule.

$$\triangle \triangle P = 10 \log \frac{1+\cos\left(\phi_1 + \frac{2\pi\ \delta\ d}{\lambda}\right)}{1+\cos\left(\frac{2\pi\ \delta\ d}{\lambda} - \phi_1\right)}$$

3. Procédé selon la revendication 1 avec en plus contrôle et ajustement du réglage en hauteur d'entrefers de têtes magnétiques pour enregistrements à n pistes, caractérisé par le fait que la bande magnétique contient, en plus, des enregistrements de mêmes phase et aimantation alternant sur chacune des deux pistes auxiliaires (1, 2), étant enregistrées avec la même phase, dans l'intervalle $t_1$ une piste auxiliaire (1), dans l'intervalle $t_2$ l'autre piste auxiliaire (2) et dans l'intervalle $t_3$ les deux pistes auxiliaires (1, 2), et le réglage en hauteur de la tête étant effectué jusqu'à obtenir à l'instant $t_3$ la tension somme $U_s$ = 2 U, U étant la tension obtenue dans chacun des intervalles $t_1$ et $t_2$.

FIG.1

FIG. 2

FIG. 3

FIG. 4